# EUROPEAN PATENT APPLICATION

(11) **EP 2 400 794 A1**
(43) Date of publication of application: **28.12.2011**
(21) Application number: 10743693.3
(22) Date of filing: 12.02.2010
(51) Int. Cl.: H04W 28/18, H04L 27/00, H04W 24/10

(54) **METHOD FOR ADAPTIVE MODULATION, WIRELESS COMMUNICATION SYSTEM, AND WIRELESS DEVICE**

(30) Priority: 23.02.2009 JP 2009039296
(71) Applicant: NEC Corporation, Tokyo 108-8001 (JP)
(72) Inventor: KAWAI, Masahiro, Tokyo 108-8001 (JP)
(74) Representative: Glawe, Delfs, Moll
(86) International application number: PCT/JP2010/052053
(87) International publication number: WO 2010/095566

(57) **Abstract**

A radio device (10) receives signals from a radio device (20) through a plurality of downlink channels that have different frequencies, decides modulation formats that have transmission performances based on qualities of the received signals for the individual downlink channels, and transmits modulation format setup information in which respective pieces of information that represent the decided modulation formats for the individual downlink channels are combined into one piece to the radio device (20) through a plurality of uplink channels that have different frequencies. The radio device (20) refers to modulation format setup information received through at least one of the plurality of uplink channels and sets up modulation formats for signals transmitted through the plurality of downlink channels based on the Modulation format setup information.

## Description

### TECHNICAL FIEND

The present invention relates to adaptive modulation techniques for use in radio communication systems typified by stationary microwave radio communication systems and so forth.

### BACKGROUND ART

An adaptive modulation system is exemplified in Patent Literature 1 (JP 10-41876A, publication). This adaptive modulation system is applied to a TDMA (Time Division Multiple Access)-FDD (Frequency Division Duplex)-based radio communication system in which frequencies used for uplink and downlink channels are different.

In the adaptive modulation system presented in Patent Literature 1, a receiving side station receives a signal having a frequency f1 from a transmitting side station through a downlink channel. In the receiving side station, a propagation path estimation section detects the state of a propagation path of the downlink channel based on the state of the received signal. Then, a control section decides a modulation format to be used on the downlink channel based on the detected state of the propagation path (namely, a modulation format that the transmitting side station uses when it transmits a signai). A signal containing information about the decided modulation format is transmitted to the transmitting side station through the uplink channel. In the transmitting side station, a modulation format that the station uses when it transmits a signal is set up based on the information about the modulation format contained in the signal received through the uplink channel.

### DISCLOSURE OF THE INVENTION

When different frequencies are used for uplink and downlink channels, the communication state may deteriorate only on the uplink channel or downlink channel due to frequency selective fading or the like. In the adaptive Modulation system presented in Patent Literature 1, if the state of the uplink channel deteriorates, the transmitting side station cannot receive the information about the modulation format from the receiving side station. As a countermeasure that the transmitting side station can take in this situation, it can be contemplated that the station preventatively selects a robust modulation format whose transmission performance is low or maintains the preceding setting for the modulation format. In this example, "robust modulation format" means that the number of signal states of the orthogonal amplitude modulation format in which the modulation amplitude is multi-valued has decreased (specifically, 64-QAM is changed to 16-QAM).

However, if the transmitting side station preventively selects a robust modulation format regardless of the state of the downlink channel, even if the downlink channel is kept in a good communication state (in which a large amount of data can be transmitted in a high multi-valued modulation format), in the transmitting side station, the robust modulation format may be set up. In this case, the use efficiency of the downlink channel decreases.

On the other hand, when the transmitting side station maintains the preceding modulation format for the downlink channel regardless its state, if the state of the downlink channel further deteriorates from the preceding setting, communication on the downlink channel may be disconnected. The communication of the downlink channel can be maintained by lowering the transmission performance of the modulation format based on the state of the downlink channel. However, in the system presented in Patent Literature 1, if the state of the uplink channel deteriorates, since the information about the modulation, format cannot be received from the receiving side station, it becomes difficult to change the modulation format of the downlink channel.

An object of the present invention is to provide an adaptive modulation system, a radio communication system, and a radio device that solve the foregoing problem, improve the use efficiency of channels, and suppress communication disconnection.

To accomplish the above-described object, an adaptive modulation method according to the present invention comprises:
causing a receiving side radio device to receive signals from a transmitting side radio device through a plurality of downlink channels that have different frequencies, to decide modulation formats having transmission performances based on qualities of the received signals for the individual downlink channels, and to transmit modulation format setup information, in which respective pieces of information that represent the decided modulation formats for the individual downlink channels are combined into one piece, to the transmitting side radio device through a plurality of uplink channels that have different frequencies; and
causing the transmitting side radio device to refer to modulation format setup information received through at least one of the plurality of uplink channels and to set up modulation formats for signals transmitted through the plurality of downlink channels based on the modulation format setup information.

A radio communication system according to the present invention includes a first radio device and a second radio device that are mutually communicably connected through a plurality of radio channels that have different frequencies, each of the first radio device and the second radio device comprises:
a plurality of transmitters that are provided corresponding to uplink channels through which signals are transmitted to communication destination radio devices, that modulate signals, and that transmit the modulated signals through the uplink channels;
a plurality of receivers that are provided corresponding to downlink channels through which signals are received from the communication destination radio devices; and
a modulation format control section that refers to respective pieces of modulation format setup information for the plurality of transmitters, these pieces of modulation format setup information being received by at least one of the plurality of receivers, and that sets up modulation formats for the plurality of transmitters based on these pieces of modulation format setup information,
wherein the modulation format control section decides modulation formats that have transmission performances based on qualities of the received signals for the individual downlink channels and causes the plurality of transmitters to transmit modulation format setup information in which respective pieces of information that represent the decided modulation formats for the individual downlink channels are combined into one piece.

A radio device according to the present invention is mutually communicably connected to an external radio device through a plurality of radio channels that have different frequencies and comprises:
a plurality of transmitters that are provided corresponding to uplink channels through which signals are transmitted to the external radio device, that modulate signals, and that transmit the modulated signals through the uplink channels;
a plurality of receivers that are provided corresponding to downlink channels through which signals are received from the external radio device; and
a modulation format control section that refers to respective pieces of modulation format setup information for the plurality of transmitters, these pieces of modulation format setup information being received by at least one of the plurality of receivers, and that sets up modulation formats for the plurality of transmitters based on these pieces of modulation format setup information,
wherein the modulation format control section decides modulation formats that have transmission performances based on qualities of the received signals for the individual downlink channels and causes the plurality of transmitters to transmit modulation format setup information in which respective pieces of information that represent the decided modulation formats for the individual downlink channels are combined into one piece.

### BRIEF DESCRIPTION OF DRAWING

[Fig. 1 is a block diagram showing a structure of a radio communication system according to a first exemplary embodiment of the present invention.
[Fig. 2] is a schematic diagram showing an exemplified format of a radio frame used in the radio communication system shown in Fig. 1.
[Fig. 3] is a flow chart showing steps of an adaptive modulation operation performed by the radio communication system shown in Fig. 1.
[Fig. 4A] is a schematic diagram showing a state in which frequency selective fading has not occurred.
[Fig. 4B] is a schematic diagram showing a state in which frequency selective fading has occurred.
[Fig. 5] is a block diagram showing a structure of a radio communication system according to a second exemplary embodiment of the present invention.
[Fig. 6] is a block diagram showing a structure of a radio communication system according to a third exemplary embodiment of the present invention.
[Fig. 7] is a block diagram showing a structure of a radio communication system according to a fourth exemplary embodiment of the present invention.
[Fig. 8] is a block diagram showing specific structures of a transmitter, a receiver, and a modulation format control section of a radio communication system according to the present invention.

### EXPLANATION OF REFERENCE NUMERALS

- 10, 20: Radio devices
- 1,3, 11, 13: Transmitters
- 2, 4, 12, 14: Receivers
- 5, 15: Modulation format control sections
- 6, 16: Couplers
- 7,17: Antennas

### DISCRIPTION OF EMBODIMENTS

Next, with reference to drawings, embodiments of the present invention will be described.

### (First Exemplary Embodiment)

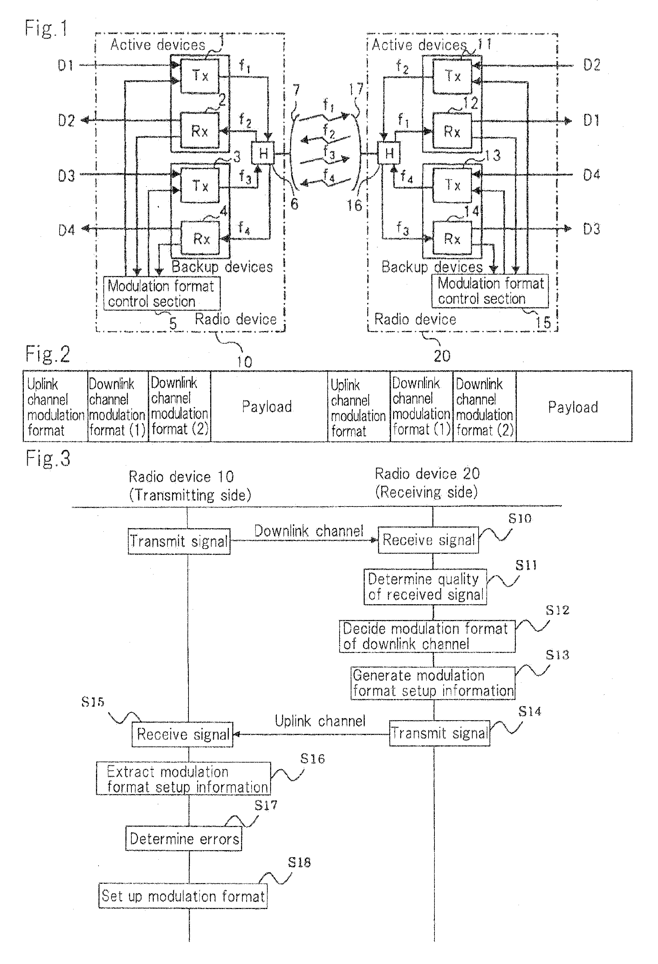

Fig. 1 is a block diagram showing a structure of a radio communication system according to a first exemplary embodiment of the present invention.

Referring to Fig. 1, the radio communication system is applicable to an FDD (Frequency Division Duplex)-based stationary microwave radio communication system and so forth, that use different frequencies for transmission and reception. The radio communication system includes radio devices 10, 20 that can mutually communicate with each other through radio channels. Radio device 10 has transmitters 1,3, receivers 2, 4, modulation format control section 5, coupler 6, and antenna 7. Radio device 20 has transmitters 11, 13, receivers 12, 14, modulation format control section 15, coupler 16, and antenna 17.

In radio device 10, transmitter 1 and receiver 2 are active devices, whereas transmitter 3 and receiver 4 are backup devices.

Transmitter 1 outputs a transmission signal that contains data D1 and respective pieces of modulation format setup information about transmitters 11, 13, these pieces of modulation format setup information being supplied from modulation format control section 5. Transmitter 3 outputs a transmission signal that contains data D3 and respective pieces of modulation format setup information about transmitters 11, 13, these pieces of the modulation format setup information being supplied from modulation format control section 5. These transmission signals supplied respectively from transmitters 1, 3 are supplied to antenna 7 through coupler 6. The center frequency of the transmission signal supplied from transmitter 1 is f1, whereas the center frequency of the transmission signal supplied from transmitter 3 is f3.

Signals having center frequencies f2, f4 transmitted from radio device 20 are received by antenna 7. The signal having center frequency f2 is supplied to receiver 2 through coupler 6, whereas the signal having center frequency f4 is supplied to receiver 4 through coupler 6.

Receiver 2 determines the quality of the received signal having center frequency f2 and supplies the determined result to modulation format control section 5. When the quality of the received signal is determined, information about the state of the transmission path such as distribution of signal points after demodulation and correction information about error correction is obtained. In addition, receiver 2 supplies the modulation format setup information contained in the received signal having center frequency f2 to modulation format control section 5. The modulation format setup information contains respective pieces of optimum modulation format designation information for transmitters 1, of radio device 10, these pieces of information having been decided by radio device 20. Data D2 contained in the received signal having center frequency f2 are supplied from receiver 2 to a data processing circuit (not shown).

Receiver 4 determines the quality of the received signal having center frequency f4 and supplies the determined result (distribution of signal points after demodulation, correction information about error correction, and so forth) to modulation format control section 5. In addition, receiver 4 supplies modulation format setup information contained in the received signal having center frequency f4 to modulation format control section 5. The modulation format setup information contained in the received signal having center frequency f4 is the same as the modulation format setup information contained in the received signal having center frequency f2. Data D4 contained in the received signal having center frequency f4 are supplied from receiver 4 to the above-described data processing circuit.

Modulation format control section 5 decides the optimum modulation format for transmitter 11, which is disposed in radio device 20 and outputs a signal having center frequency f2, based on the determined result for the quality of the received signal supplied from receives 2. Modulation format control section 5 decides the optimum modulation format for transmitter 13, which is disposed in radio device 20 and outputs a signal having center frequency f4, based on the determined result for the quality of the received signal supplied from receives 4. Modulation format control section 5 supplies modulation format setup information in which respective pieces of information that represent the decided optimum modulation formats are combined into one piece to transmitters 1, 3.

Moreover, modulation format control section 5 determines whether or not respective pieces of the modulation format setup information supplied from receivers 2, 4 have been correctly transmitted (whether or not they contain errors). For example, parity information is added to modulation format setup information and it is determined whether or not the modulation format setup information contains errors based on the parity information. When both the states of channels, through which the transmitted signals are supplied from receivers 2, 4, are satisfactory, since the respective pieces of modulation format setup information extracted from these transmitted signals accurately match, modulation format control section 5 determines that they do not contain errors. Alternatively, errors of the modulation format setup information can be corrected based on parity information. Receivers 2, 4 can correct errors.

When both the pieces of modulation format setup information supplied from receivers 2, 4 do not contain errors, modulation format control section 5 refers to the modulation format setup information supplied from receiver 2 to set up a modulation format for transmitter 1 based on the modulation format setup information supplied from receiver 2, and refers to the modulation format setup information supplied form receiver 4 to set up a modulation format for transmitter 3 based on the modulation format setup information supplied from receiver 4. When one of these pieces of modulation format setup information supplied from receivers 2, 4 contains errors, modulation format control section 5 refers to the other piece of modulation format setup information and sets up modulation formats for transmitters 1, 3 based on the other piece of modulation format setup information. Alternatively, when one of these pieces of modulation format setup information supplied from receivers 2, 4 does not contain errors, modulation format control section 5 may refer to the piece of modulation format setup information that does not contain errors and set up modulation formats for transmitters 1, 3 based on this piece of modulation format setup information.

In radio device 20, transmitter 11 and receiver 12 are active devices, whereas transmitter 13 and receiver 14 are backup devices.

Transmitter 11 outputs a signal that contains data D2 and respective pieces of modulation format setup information about transmitters 1,3, these pieces of modulation format setup information being supplied from modulation format control section 15. Transmitter 13 outputs a signal that contains data D4 and respective pieces of modulation format setup information about transmitters 1, 3, these pieces of modulation format setup information being supplied from modulation format control section 15. These signals respectively supplied from transmitters 11, 13 are supplied to antenna 17 through coupler 16. The center frequency of the transmission signal supplied from transmitter 11 is f2, whereas the center frequency of the transmission signal supplied from transmitter 13 is f4.

Signals having center frequencies f1, f3 transmitted from radio device 10 are received by antenna 17. The signal having center frequency f1 is supplied to receiver 12 through coupler 6, whereas the signal having center frequency f3 is supplied to receiver 14 through coupler 16.

Receiver 12 determines the quality of the received signal having center frequency f1 and supplies the determined result (distribution of signal points after demodulation, error information about error correction, and so forth) to modulation format control section 15. In addition, receiver 12 supplies modulation format setup information contained in the received signal having center frequency f1 to modulation format control section 15. This modulation format setup information contains pieces of information about optimum modulation formats for transmitters 11,13 of radio device 20, these pieces of information having been decided by radio device 10. Data D1 contained in the received signal having center frequency f1 are supplied from receiver 12 to the data processing circuit (not shown).

Receiver 14 determines the quality of the received signal having center frequency f3 and supplies the determined result (distribution of signal points after demodulation, correction, information about error correction, and so forth) to modulation format control section 15. In addition, receiver 14 supplies modulation format setup information contained in the received signal having center frequency f3 to modulation format control section 15. The modulation format setup information contained in the received signal having center frequency f3 is the same as the modulation format setup information contained in the received signal having center frequency f1. Data D3 contained in the received signal having center frequency f3 are supplied from receiver 14 to the foregoing data processing circuit.

Modulation format control section 15 decides the optimum modulation format for transmitter 1 which is disposed in radio device 10 and outputs a signal having center frequency f1, based on the determined result for the quality of the received signal supplied from receiver 12. In addition, modulation format control section 15 decides the optimum modulation format for transmitter 3, which is disposed in radio devices 10 and outputs a. signal having center frequency f3, based on the determined result for the quality of the received signal supplied from receiver 14. Modulation format control section 15 supplies Modulation format setup information in which respective pieces of information that represent the decided optimum modulation formats are combined into one piece to transmitters 11, 13.

When modulation format control section 5 decides a modulation format, techniques, in which the number of multi-valued signal states of the QAM format is increased or decreased, the number of parity bits for error correction is increased or decreased, or the modulation speed is increased or decreased, are used.

In the technique in which a modulation format is decided by increasing or decreasing the number of multi-valued signal states of the QAM format, when the state of the transmission path deteriorates, the number of multi-valued signal states of the QAM format is decreased (for example, 64QAM is changed to 16QAM). In this case, the state of the transmission path may be represented in a plurality of levels, a table that tabulates optimum numbers of multi-valued signal states of the QAM format corresponding to individual levels may be provided in advance, and modulation format control section 5 may refer to the table to decide the number of multi-valued signal states of the QAM format corresponding to the state of the transmission path based on the table.

In the technique in which a modulation format is decided by increasing or decreasing the number of parity bits, when the state of the transmission path deteriorates, the number of parity bits for error correction is increased so as to improve the correction performance. In this case, the state of the transmission path may be represented in a plurality of levels, a table that tabulates optimum numbers of parity bits for error correction corresponding to the levels may be provided in advance, and modulation format control section 5 may refer to the table to decide parity bits corresponding to the state of the transmission path based on the table.

In the technique in which a modulation format is decided by increasing or decreasing the modulation speed, when the state of the transmission path deteriorates, the modulation speed is decreased so as to improve the S/N ratio. In this case, the state of the transmission path may be represented in a plurality of levels, a table that tabulates information about optimum modulation speeds corresponding to levels may be provided in advance, and modulation format control section 5 may refer to the table to decide the modulation speed corresponding to the state of the transmission path based on the table.

Modulation format control section 5 may decide a modulation format based on any one or any combination of the foregoing techniques.

Moreover, modulation format control section 15 determines whether or not respective pieces of modulation format setup information supplied from receivers 12, 14 have been correctly transmitted (whether or not they contain errors). When modulation format control section 25 determines whether or not these pieces of modulation format setup information contain errors, modulation format control section 15 uses the above-described parity information. Alternatively, receivers 12, 14 or modulation format control section 15 may correct errors of these pieces of modulation format setup information based on the parity information.

When both the pieces of modulation format setup information supplied from receivers 12, 14 do not contain errors, modulation format control section 15 refers to the piece of modulation format setup information supplied from receiver 12, sets up a modulation format for transmitter 11 based on this piece of modulation format setup information supplied from receiver 12, refers to this piece of modulation format setup information supplied form receiver 14, and sets up a modulation format for transmitter 13 based on this piece of modulation format setup information supplied from receiver 14. When one of these pieces of modulation format setup information supplied from receivers 12, 14 contains errors, modulation format control section 15 refers to the other piece of modulation format setup information and sets up modulation formats for transmitters 11, 13 based on this piece of modulation format setup information. Alternatively, when one of these pieces of modulation format setup information supplied from receivers 12, 14 does not contain errors, modulation format control section 15 may refer to the piece of modulation format setup information that not contain errors and set up modulation formats for transmitters 11,13 based on this piece of modulation format setup information.

This embodiment is assumed to be a redundantly structure communication system. A radio channel from transmitter 1 of radio device 10 to receiver 12 of radio device 20 and a radio channel from transmitter 11 of radio device 20 to receiver 2 of radio device 10 are used as active channels. On the other hand, a radio channel from transmitter 3 of radio device 10 to receiver 14 of radio device 20 and a radio channel from transmitter 13 of radio device 20 to receiver 4 of radio device 10 are used as backup channels.

Next, an adaptive modulation operation of the radio communication system according to this embodiment will be specifically described.

For simplicity, in the following description, when the case in which information is transmitted from radio device 10 to radio device 20 is mainly explained, information transmission is referred to as communication state A, whereas when the case in which information is transmitted from radio device 20 to radio device 10 is mainly explained, information transmission is referred to as communication state B. In the communication state A, it is supposed that a radio channel from radio device 10 to radio device 20 is a downlink channel and that a radio channel from radio device 20 to radio device 10 is an uplink channel. By contract, in communication state B, it is supposed that a radio channel from radio device 20 to radio device 10 is a downlink channel and that a radio channel from radio device 10 to radio device 20 is an uplink channel.

First of all, a structure of a radio frame transmitted between radio device 10 and radio device 20 will be described.

Fig. 2 shows an exemplified format of a radio frame used on an uplink channel. This radio frame contains an uplink channel modulation format information storage section, a downlink channel modulation format information (1) storage section, a downlink channel modulation format information (2) storage section, and a payload.

The uplink channel modulation format information storage section is a section that stores information that represents a modulation format of a signal that is transmitted as a radio frame through the uplink channel. The downlink channel Modulation format information (1) storage section and downlink channel modulation format information (2) storage section are sections that store respective pieces of information that represents optimum modulation formats used in the active and backup downlink channels. Data to be transmitted are stored in the payload.

In communication state A, information that represents a modulation format that transmitter 11 uses when it transmits a radio frame is stored in the uplink channel modulation format information storage section. Receivers 2, 4 of radio device 10 to which the radio frame is transmitted can refer to modulation format information stored in the uplink channel modulation format information storage section of the radio frame transmitted from transmitter 11 and can determine the modulation format of the received signal.

Moreover, in the radio frame transmitted from transmitter 11, information that represents the optimum modulation format that is set up for transmitter 1 of radio device 10 is stored in the downlink channel modulation format information (1) storage section, whereas information that represents the optimum modulation format that is set up for transmitter 3 of radio device 10 is stored in the downlink channel modulation format information (2) storage section. The optimum modulation formats used for the active and backup downlink channels have been decided by modulation format control section 15 based on the determined results for the qualities of the signals received from receivers 12, 14. The data D2 are stored in the payload of the radio frame.

As with the above-described transmitter 11, transmitter 13 outputs a transmission signal composed of the radio frames shown in Fig. 2. In the radio frames transmitted from transmitters 11, 13, modulation format information stored in the downlink channel modulation format information (1) storage section is the same, and so is modulation format information stored in the downlink channel modulation format information (2) storage section.

In communication state B, information that represents a modulation format that transmitter 1 uses when it transmits a radio frame is stored in the uplink channel modulation format information storage section. Receivers 12, 14 of radio device 20 to which the radio frame is transmitted can refer to modulation format information stored in the uplink channel modulation format information storage section of the radio frame transmitted from transmitter 1 and can determine the modulation format of the received signal based on the modulation format information.

Moreover, in the radio frame transmitted from transmitter 1, information that represents the optimum modulation format that is set up for transmitter 11 of radio device 20 is stored in the downlink channel modulation format information (1) storage section, whereas information that represents the optimum modulation format that is set up for transmitter 13 of radio device 20 is stored in the downlink channel modulation format information (2) storage section. The optimum modulation formats used for the active and backup downlink channels have been decided by modulation format control section 5 based on the determined results for the qualities of the signals received from receivers 2, 4. The data D1 are stored in the payload of the radio frame.

As with the above-described transmitter 1, transmitter 3 outputs a transmission signal composed of the radio frames shown in Fig. 2. In the radio frames transmitted from transmitters 1, 3, modulation format information stored in the downlink channel modulation format information (1) storage section is the same, and so is modulation format information stored in the downlink channel modulation format information (2) storage section.

Next, an adaptive modulation operation in the radio communication system according to this embodiment will be specifically described.

Fig. 3 is a flow chart showing steps of the adaptive modulation operation. Next, with reference to Fig. 1 to Fig. 3, the adaptive modulation operation in the communication state A in which the radio device 10 is the transmitting side and radio device 20 is the receiving side will be described.

In radio device 20, the transmitted signal (having center frequency f1) transmitted from transmitter 1 and the transmitted signal (having center frequency f3) transmitted from transmitter 3 are received by antenna 17. The received signal (having center frequency f1) is supplied to receiver 12 and the received signal (having center frequency f3) is supplied to receiver 12 (at step S10 shown in Fig. 3).

Receiver 12 determines the quality of the received signal of the active downlink channel, that is, the received signal (having center frequency f1). Receiver 14 determines the quality of the received signal of the backup downlink channel, that is, the received signal (having center frequency f3) (at step S11 shown in Fig. 3). Then, modulation format control section 15 decides the optimum modulation format for the active downlink channel based on the determined result of the quality of the received signal (having center frequency f1) and the optimum modulation format for the backup downlink channel based on the determined result of the quality of the received signal (having center frequency f3) (at step S12 shown in Fig. 3).

Then, modulation format control section 15 generates modulation format setup information in which respective pieces of information that represent the modulation formats for the active downlink channel and backup downlink channel decided at step S12 are combined into one piece (at step S 1 shown in Fig. 3). Then, transmitters 11, 13 transmit signals containing the generated modulation format setup information (at step S14 shown in Fig. 3). The signals supplied from transmitters 11, 13 are transmitted from antenna 17 to radio device 10.

In radio device 10, the signal (having center frequency f2) transmitted from transmitter 11 and the signal (having center frequency f4) transmitted from transmitter 13 are received by antenna 7. The received signal (having center frequency f2) is supplied to receiver 2 and the received signal (having center frequency f4) is supplied to receiver 2 (at step S15 shown in Fig. 3).

Receiver 2 extracts modulation format setup information from the received signal (having center frequency f2) and supplies the extracted information to modulation format control section 5. Receiver 4 extracts modulation format setup information from the received signal (having center frequency f4) and supplies the extracted information to modulation format control section 5 (at step S16 shown in Fig. 3). The modulation format setup information extracted from the received signal (having center frequency f2) is the same as the modulation format setup information extracted from the received signal (having center frequency f4) and they contain the information that represents the optimum modulation format for the active uplink channel and the information that represents the optimum modulation format for the backup uplink channel. Depending on the communication states of the active downlink channel and backup downlink channel, however, errors may occur in the received signals and thereby the their substances may not match.

Modulation format control section 5 determines whether or not the respective pieces of modulation format setup information supplied from receivers 2, 4 contain errors (at step S17 shown in Fig. 3). When the determined result denotes that at least one of these pieces of modulation format setup information does not contain errors, modulation formats control section 5 refers to the piece of modulation format setup information that does not contain errors and sets up modulation formats for transmitters is 3 based on this piece of modulation format setup information (at step S18 shown in Fig. 3).

When the determined result at step S17 denotes that both the pieces of modulation format setup information contain errors, modulation format control section 5 sets up designated modulation formats for transmitters 1, 3. When this modulation format is set up, modulation format control section 5 may preventively set up robust modulation formats for transmitters 1, 3 so as to decrease the transmission capacity. Alternatively, modulation format control section 5 may maintain the preceding settings.

When the determined result at step S17 denotes that both the pieces of modulation format setup information contain errors, they may be corrected. When errors of one of both the pieces of modulation format setup information are exactly corrected by an error correction technique, modulation format control section 5 refers to the corrected modulation format setup information and sets up modulation formats for transmitters 1, 3 based on the corrected information at step S18.

When the modulation formats have been set up at step S18, transmitters 1, 3 modulate signals based on the decided modulation formats and transmit the modulated signals. The modulated signals are received by radio device 20. When radio device 20 receives the signals, radio devices 10, 20 execute the operation from step S10 to step S18 described above.

Although the adaptive modulation operation in communication state A has been described, the adaptive modulation operation in communication state B is also similarly performed. The adaptive modulation, operation in communication state B is performed assuming that radio device 10 and radio device 20 shown in Fig. 3 are a receiving side device and a transmitting side device, respectively.

When the foregoing adaptive modulation operation in communication state A is performed, radio device 20 transmits modulation format setup information, in which respective pieces of information that represent optimum modulation formats for the active downlink channel and backup downlink channel are combined into one piece, to radio device 10 through the active uplink channel and backup uplink channel. When the communication state of one of the active uplink channel and backup uplink channel deteriorates, radio device 10 can receive the modulation format setup information from radio device 20 through the other uplink channel. Thus, radio device 10 can refer to the modulation format setup information to set up optimum modulation formats for transmitters 1, 3 based on the modulation format setup information.

When the foregoing adaptive modulation operation in communication state B is performed, radio device 10 transmits modulation format setup information, in which respective pieces of information that represent optimum modulation formats for the active downlink channel and backup downlink channel are combined into one piece, to radio device 20 through the active uplink channel and backup uplink channel. When the communication state of one of the active uplink channel and backup uplink channel deteriorates, radio device 20 can receive the modulation format setup information from radio device 10 through another uplink channel. Thus, radio device 20 can refer to the modulation format setup information to set up optimum modulation formats for transmitters 11,13 based on the modulation format setup information.

Next, the case in which optimum modulation formats are set up by the adaptive modulation operation in an FDD-based stationary microwave radio communication system according to this embodiment will be exemplified.

In this stationary microwave radio communication system, signals having different frequencies are transmitted and received between radio devices 10, 20. In this structure, a notch due to frequency selective fading may occur in one of a transmission path (channel) from radio device 10 to radio device 20 and a transmission path (channel) from radio device 20 to radio device 10 and thereby the states the transmission paths may deteriorate.

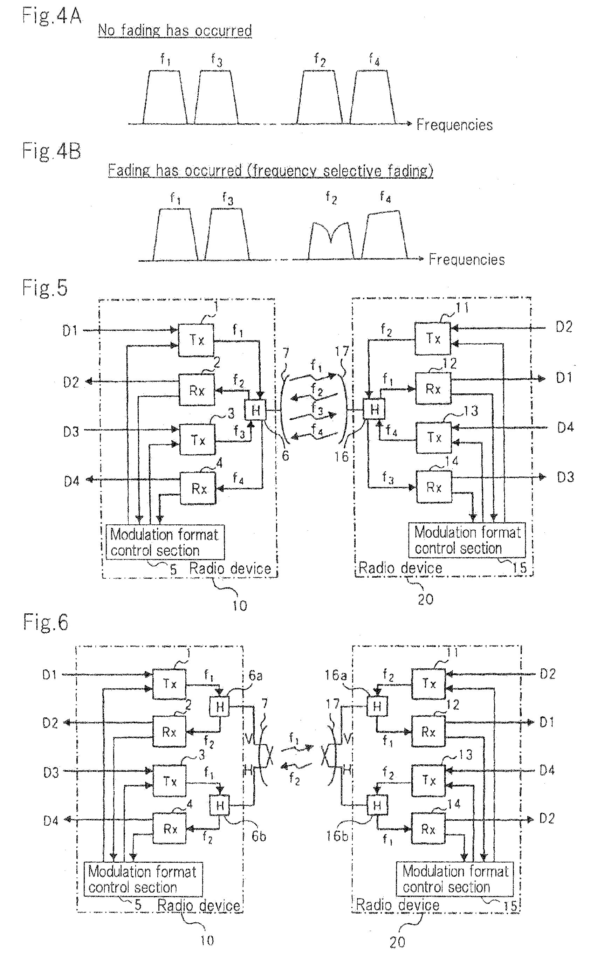

Fig. 4A shows a state in which frequency selective fading has not occurred. The horizontal axis represents frequencies. In this example, radio channels used for the radio communication system shown in Fig. 1 are represented on the frequency axis. In Fig. 4A, f1 represents a communication state of an active channel through which a signal is transmitted from transmitter 1, whereas f2 represents a communication state of an active channel through which a signal is transmitted from transmitter 11. On the hand, f3 represents a communication state of a backup channel through which a signal is transmitted from transmitter 3, whereas f4 represents a communication state of a backup channel through which a signal is transmitted from transmitter 13. f1 to f4 are center frequencies of signals transmitted through respective channels and have the relationship of f1 < f2 < f3 < f4.

In the communication state shown in Fig. 4A, radio device 10 can receives respective pieces of modulation format setup information that represent optimum, modulation formats for transmitters 1,3 from radio device 20 through both the active channel (f2) and the backup channel (f4). In radio device 10, modulation format control section 5 refers to the modulation format setup information received through the active channel (f2) or backup channel (f4) and sets up modulation formats for transmitters 1, 3 based on the modulation format setup information.

Fig. 4B shows a state in which a notch due to frequency selective fading has occurred. The horizontal axis represents frequencies. f1 to f4 shown in Fig. 4B correspond to channels of f1 to f4 shown in Fig. 4A. Fading has occurred on the backup channels having frequencies f2, f4 and the influence of fading in the backup channel having frequency f2 is more serious than that in the backup line having frequency f4. Thus, the communication quality of the backup channel having frequency f2 has excessively deteriorated due to frequency selective fading and thereby a notch has occurred.

In the communication state shown in Fig. 4B, although radio device 10 can normally receive the signal (having center frequency f4) from transmitter 13, it cannot normally receive the signal (having center frequency f2) from transmitter 11. In this embodiment, however, since respective pieces of modulation format setup information for transmitters 1, 3 are transmitted from transmitters 11, 13, radio device 10 can receive respective pieces of modulation format setup information for transmitters 1, 3 through the backup channel having center frequency to, Thus, modulation format control section 5 can refer to the modulation format setup information received through the backup channel to set up optimum modulation formats for transmitters 1, 3.

### (Second Exemplary Embodiment)

Fig. 5 is a block diagram showing a structures of a radio communication system according to a second exemplary embodiment of the present invention.

The structure of the radio communication system according to this embodiment is the same as that according to the first exemplary embodiment except that in the former, transmitters 3, 13 and receivers 4, 14 are used as active devices rather than backup devices. In other words, in the radio communication system according to the second exemplary embodiment, radio devices 10, 20 are connected through a plurality of uplink channels and a plurality of downlink channels. Since the operation of each section of radio devices 10, 20 is the same as that according to the first exemplary embodiment, their description is omitted.

### (Third Exemplary Embodiment)

Fig. 6 is a block diagram showing a structure of a radio communication system according to a third exemplary embodiment of the present invention.

The radio communication system according to this embodiment is different from that according to the first exemplary embodiment in that the former uses co-channel transmission. In the co-channel transmission, one channel is used, for example, as a first channel through which a vertically polarized radio signal is transmitted and a second channel through which a horizontally polarized radio signal is transmitted.

To perform the co-channel transmission, the radio communication system according to this embodiment uses couplers 6a, 6b instead of coupler 6; and couplers 16a, 16b instead of coupler 16. In this example, each of antennas 7, 17 can transmit a vertically polarized radio signal and a horizontally polarized radio signal. The other structures of the radio communication system according to this embodiment are basically the same as those according to the first exemplary embodiment.

In radio device 10, a signal (having center frequency f1) supplied from transmitter 1 is supplied to antenna 7 through coupler 6a and transmitted as a vertically polarized signal from antenna 7 to radio device 20. A signal (having center frequency f1) supplied from transmitter 3 is supplied to antenna 7 through coupler 6b and transmitted as a horizontally polarized signal from antenna 7 to radio device 20.

The vertically polarized radio signal and horizontally polarized radio signal (each having center frequency f1) are received by antenna 17 of radio device 20. The vertically polarized radio signal (having center frequency f1) is supplied to receiver 12 through coupler 16a. The horizontally polarized radio signal (having center frequency f1) is supplied to receiver 14 through coupler 16b.

In radio device 20, a signal (having center frequency f2) supplied from transmitter 11 is supplied to antenna 17 through coupler 16a and transmitted as a vertically polarized signal from antenna 17 to radio device 10. A signal (having center frequency f2) supplied from transmitter 13 is supplied to antenna 17 through coupler 16b and transmitted as a horizontally polarized signal from antenna 17 to radio device 10.

The vertically polarized radio signal and horizontally polarized radio signal (each having center frequency f2) are received by antenna 7 of radio device 10. The vertically polarized radio signal (having center frequency f2) is supplied to receiver 2 through coupler 6a. The horizontally polarized radio signal (having center frequency f1) is supplied to receiver 4 through coupler 6b.

The first co-channel of the vertical polarization and the second co-channel of the horizontal polarization can be considered as independent transmission paths. Thus, it can be considered that the radio communication system according to this embodiment is the same as the system shown in Fig. 1 as an adaptive modulation system.

The radio communication system according to this embodiment perform an adaptive modulation operation similar to that of the first exemplary embodiment. Thus, when the communication state deteriorates in one of the first channel (vertical polarization) and the second channel (horizontal polarization) of a radio channel (f2), radio device 10 can obtain respective pieces of modulation format setup information for transmitters 1, 3 through another channel. Thus, the radio communication system according to this embodiment can accomplish an effect similar to that of the first exemplary embodiment.

### (Fourth Exemplary Embodiment)

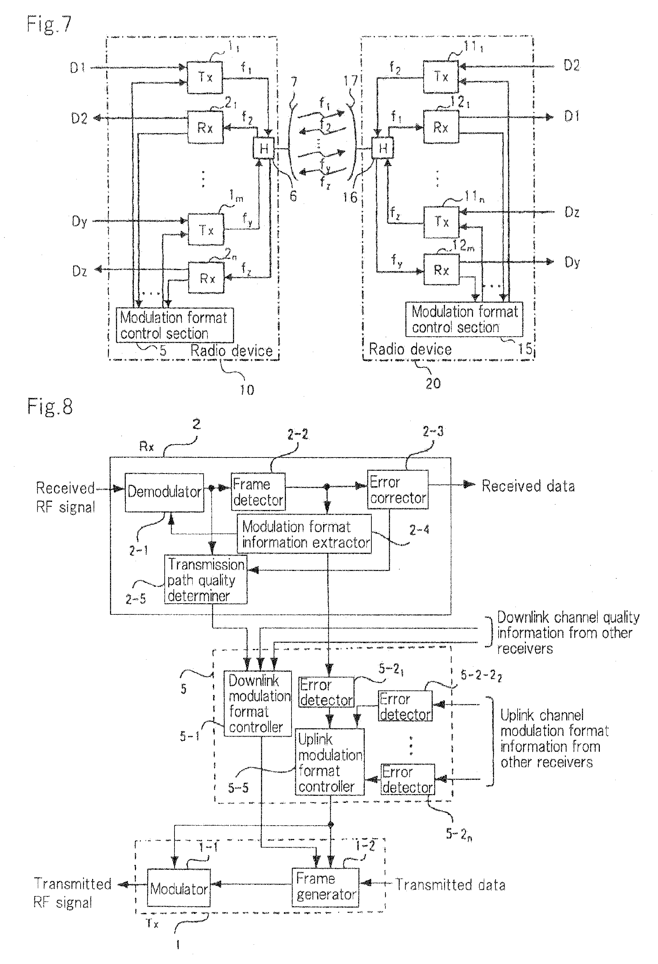

Fig. 7 is a block diagram showing a structure of a radio communication system according to a fourth exemplary embodiment of the present invention.

In the radio communication systems according to the second exemplary embodiment, the number of channels from radio device 10 to radio device 20 is two, whereas the number of channels from radio device 20 to radio device 10 is two. By contrast, in the radio communication system according to the fourth exemplary embodiment, the number of channels from radio device 10 to radio device 20 is M, whereas the number of channels from radio device 20 to radio device 10 is N. The number of channels M may be the same as or different from the number of channels N.

Radio device 10 has M transmitter 1₁ to 1ₘ, N receivers 2₁ to 2ₙ, modulation control section 5, coupler 6, and antenna 7. Each of transmitters 1₁ to 1ₘ is similar to transmitters 1 shown in Fig. 1 and the center frequencies of signals transmitted therefrom are different. Likewise, each of receivers 2₁ to 2ₙ is similar to receiver 2 shown in Fig. 1 and the center frequencies of signals received thereby are different. Modulation control section 5, coupler 6, and antenna 7 shown in Fig. 7 are the same as those shown in Fig. 1.

Radio device 20 has N transmitters 11₁ to 11ₙ, M receivers 12₁ to 12ₘ, modulation control section 15, coupler 16, and antenna 17. Each of transmitters 11₁ to 11ₙ is similar to transmitter 11 shown in Fig. 1 and the center frequencies of signals transmitted therefrom are different. Likewise, each of receivers 12₁ to 12ₘ is similar to receiver 12 shown in Fig. 1 and the center frequencies of signals received thereby are different. Modulation control section 15, coupler 16, and antenna 17 shown in Fig. 7 are the same as those shown in Fig. 1.

The radio communication system according to this embodiment performs an adaptive modulation operation that is similar to that according to the first exemplary embodiment. Specifically, radio device 20 transmits modulation format setup information, in which respective pieces of information that represent modulation formats for transmitters 1₁ to 1ₘ which are decided by modulation format control section 15 are combined into one piece, through each of N channels. Radio device 10 extracts respective pieces of modulation format setup information from the signals received through N channels and determines errors of each piece of modulation format setup information that have been extracted. Then, radio device 10 refers to one piece of modulation format setup information determined not to contain errors and sets up modulation formats for transmitters 1₁ to 1ₘ based on this piece of modulation format setup information.

On the other hand, radio device 10 transmits modulation format setup information, in which respective pieces of information that represent modulation formats for transmitters 11₁ to 11ₙ which are decided by modulation format control section 5 are combined into one piece, through each of M channels. Radio device 20 extracts respective pieces of modulation format setup information from the signals received through M channels and determines errors of each piece of modulation format setup information that have been extracted. Then, radio device 20 refers to one piece of modulation format setup information determined not to contain errors and sets up modulation formats for transmitters 11₁ to 11ₙ based on this piece of the modulation format setup information.

The radio communication systems according to the above-described individual embodiments are examples of the present invention and thereby they may be properly changed without departing from the spirit of the present invention.

For example, in the radio communication system shown in Fig. 6, the number of transmission paths (including the first channel of the vertical polarization and the second channel of the horizontal polarization) from radio device 10 to radio device 20 is one and the number of transmission paths (including the first channel of the vertical polarization and the second channel of the horizontal polarization) from radio device 20 to radio device 10 is one. It should be noted that the present invention is not limited to such a structure. Instead, the number of transmission paths from radio device 10 to radio device 20 may be M, whereas the number of transmission paths from radio device 20 to radio device 10 is N. In this case, M may be the same as or different from N.

Moreover, in each embodiment, although modulation format setup information in which respective pieces of information that represent modulation formats for individual downlink channels are combined into one piece is transmitted as a radio frame, the present invention is not limited to such a structure. Instead, modulation format setup information may be transmitted at intervals of a predetermined period of time.

Furthermore, in the radio frame shown in Fig. 2, the uplink channel modulation format information storage section may have a first storage section and a second storage section. In this case, the first storage section stores information that represents a modulation format used when modulation format setup information stored in the downlink channel modulation format information (1) storage section and modulation format setup information stored in the downlink channel modulation format information (2) storage section are transmitted. The second storage sections stores information that represents a modulation formats used when data stored in the payload are transmitted. The modulation format based on which modulation format setup information is transmitted may be different from the modulation format based on which data stored in the payload are transmitted. For example, as the modulation format based on which modulation format setup information is transmitted, a modulation format that is more robust against errors, such as QPSK (Quadrature Phase-Shift Keying) or BPSK (Binary Phase-Shift Keying) may be used regardless of the modulation format for data.

Moreover, in each embodiment, the transmitting side radio device and the receiving side radio device can have the same structure. Specifically, in the structures shown in Fig. 1, Fig. 5, Fig. 6, and Fig. 7, the sections composed of transmitters, receivers, and a modulation formats control section can have the same structure.

Fig. 8 shows specific structures of the transmitter, receiver, and modulation format control section. In Fig. 8, transmitter 1, receiver 2, and modulation format control section 5 correspond to those shown in Fig. 1, Fig. 5, Fig. 6, and Fig. 7.

Transmitter 1 has modulator 1-1 and frame generator 1-2. The other transmitters have the same structure as transmitter 1.

Receiver 2 has demodulator 2-1, frame detector 2-2, error corrector 2-3, modulation format information extractor 2-4, and transmission path quality determiner 2-5. The other receivers have the same structure as receiver 2.

Modulation format control section 5 has downlink modulation format controller 5-1, n error detectors 5-2₁ to 5-2ₙ, and uplink modulation format controller 5-5. The number of error detectors 5-2₁ to 5-2ₙ depends on the number of receivers. For example, since radio device 10 shown in Fig. 1 has two receivers 2, 4, the number of error detectors is two.

Demodulator 2-1 demodulates a received RF signal based on a modulation format designated by modulation format information extractor 2-4. Frame detector 2-2 detects a frame from the demodulated signal that is input from demodulator 2-1 and outputs both a pulse that represents the position of the frame and data. Error corrector 2-3 corrects errors of the signal that is input from frame detector 2-2. In addition, error corrector 2-3 outputs information such as an error correction pulse for which the reception quality is determined to transmission path quality determiner 2-5.

Modulation format information extractor 2-4 extracts modulation format setup information from the beginning of a frame of the signal that is input from frame detector 2-2. Information about the uplink channel modulation format, which represents the modulation format of its own demodulator, from among the extracted modulation format setup information is supplied from modulation format information extractor 2-4 to demodulator 2-1. On the other hand, the downlink channel modulation format setup information of the extracted modulation format setup information is supplied from modulation format information extractor 2-4 to error detector 5-2₁ of modulation format control section 5.

Transmission path quality determiner 2-5 determines the reception quality based on information such as dispersion of demodulated signal points and error correction pulses for error correction. The determined result is supplied from transmission path quality determiner 2-5 to downlink modulation format controller 5-1 of modulation format control section 5.

Downlink modulation format controller 5-1 determines modulation formats for individual downlink channels based on reception quality information supplied from individual demodulator of its own station. The determined result is supplied from downlink modulation format controller 5-1 to frame generator 1-2 of transmitter 1.

Error detectors 5-2₁ to 5-2ₙ determine errors of individual pieces of uplink channel modulation format setup information supplied from the individual demodulators based on parity bits and so forth and supplies information about whether or not there are errors along with the modulation format setup information to uplink modulation format controller 5-5.

Uplink modulation format controller 5-5 selects a piece that does not contain errors from those of modulation format setup information supplied from error detectors 5-2₁ to 5-2ₙ as a modulation format setup signal that transmitter 1 has to transmit and sends the modulation format setup signal to frame generator 1-2 and modulator 1-1. In addition, uplink modulation format controller 5-5 selects a piece that does not contain errors from those of modulation format setup information supplied from error detectors 5-2₁ tics 5-2ₙ as a modulation format setup signal that the transmitter has to transmit and sends the modulation format setup signal to the frame generator and modulator of each of the other transmitters. For example, in radio device 10 shown in Fig. 1, uplink modulation format controller 5-5 supplies the modulation format setup signal to transmitters 1, 3.

Frame generator 1-2 stores the uplink modulation format information supplied from uplink modulation format controller 5-5 and downlink modulation format information supplied from downlink modulation format controller 5-1 in the frame shown in Fig. 2 so as to generate the frame. Modulator 1-1 modulates the signal supplied from frame generator 1-2 based on the modulation format setup supplied from uplink modulation format controller 5-5 and transmits the modulated signal.

The structure shown in Fig. 8 can be applied to the radio device according to each of the embodiments.

According to the present invention as described above, a receiving side radio device receives signals from a transmitting side radio device through a plurality of downlink channels having different frequencies, decides modulation formats having transmission performances based on qualities of the received signals for the individual downlink channels, and transmits modulation format setup information in which respective pieces of information that represent the decided modulation formats for the individual downlink channels are combined into one piece to the transmitting side radio device through a plurality of uplink channels having different frequencies. The transmitting side radio device refers to modulation format setup information received through at least one of the plurality of uplink channels and set up modulation formats for signals transmitted through the plurality of downlink channels based on the modulation format setup information. Thus, even if the state of a uplink channel deteriorates, since the transmitting side radio device can receive information about modulation formats that have been set up for individual downlink channels through another normal uplink channel, optimum modulation formats for individual downlink channels can be used. Thus, the use efficiency of channels can be improved and communication disconnection can be suppressed.

The present invention can be applied to general radio communication devices such as stationary microwave radio communication devices that use a plurality of channels.

Now, with reference to the embodiments, the present invention has been described. However, it should be understood by those skilled in the art that the structure and details of the present invention may be changed in various manners without departing from the spirit of the present invention.

The present application claims a priority based on Japanese Patent Application JP 2009-039296 filed on February 23, 2009, the entire contents of which are incorporated herein by reference in its entirety.

## Claims

1. An adaptive modulation method, comprising:
causing a receiving side radio device to receives signals from a transmitting side radio device through a plurality of downlink channels that have different frequencies, to decide modulation formats that have transmission performances based on qualities of the received signals for the individual downlink channels, and to transmit modulation format setup information, in which respective pieces of information that represent the decided modulation formats for the individual downlink channels are combined into one piece, to said transmitting side radio device through a plurality of uplink channels that have different frequencies; and
causing said transmitting side radio device to refer to modulation format setup information received through at least one of said plurality of uplink channels and to set up modulation formats for signals transmitted through said plurality of downlink channels based on the modulation format setup information.

2. The adaptive modulation method as set forth in claim 1,
wherein said transmitting side radio device determines whether or not each piece of the modulation format setup information received through said plurality of uplink channels contains errors, refers to a piece of modulation format setup information determined not to contain errors, and sets up said modulation formats based on the piece of modulation format setup information.

3. The adaptive modulation method as set forth in claim 1 or claim 2,
wherein said received signals contain parity bits for error correction, and
wherein said receiving side radio device increases or decreases the number of parity bits for said error correction based on the qualities of the received signals for the individual downlink channels so as to decide said modulation formats.

4. The adaptive modulation method as set forth in claim 1 or claim. 2,
wherein said modulation formats are orthogonal amplitude modulation formats in which signal states of a modulation amplitude are multi-valued, and
wherein said receiving side radio device increases or decreases the number of multi-valued signal states of said orthogonal amplitude modulation format based on the qualities of the received signals for the individual downlink channels so as to decide said modulation formats.

5. The adaptive modulation method as set forth in claim 1 or claim 2,
wherein said receiving side radio device increases or decreases a modulation speed based on the qualities of the received signals for the individual downlink channels so as to decide said modulation formats.

6. The adaptive modulation method as set forth in any one of claims 1 to 5,
wherein said plurality of downlink channels include an active downlink channel and a backup downlink channel and said plurality of uplink channels include an active uplink channel and a backup uplink channel.

7. The adaptive modulation method as set forth in any one of claims 1 to 5,
wherein said plurality of downlink channels include a downlink channel for a first polarization and a downlink channel for a second polarization that is different from said first polarization and said plurality of uplink channels include an uplink channel for said first polarization and an uplink channel for said second polarization.

8. A radio communication system that includes a first radio device and a second radio device that are mutually communicably connected through a plurality of radio channels that have different frequencies, each of said first radio device and said second radio device comprising:
a plurality of transmitters that are provided corresponding to uplink channels through which signals are transmitted to communication destination radio devices, that modulate signals, and that transmit the modulated signals through the uplink channels;
a plurality of receivers that are provided corresponding to downlink channels through which signals are received from said communication destination radio devices; and
a modulation format control section that refers to respective pieces of modulation format setup information for said plurality of transmitters, these pieces of modulation format setup information being received by at least one of said plurality of receivers, and that sets up modulation formats for said plurality of transmitters based on these pieces of modulation format setup information,
wherein said modulation format control section decides modulation formats that have transmission performances based on qualities of the received signals for said individual downlink channels and causes said plurality of transmitters to transmit modulation format setup information in which respective pieces of information that represent the decided modulation formats for the individual downlink channels are combined into one piece.

9. The radio communication system as set forth in claim 8,
wherein said modulation format control section determines whether or not each of the pieces of the modulation format setup information received by said plurality of receivers contains errors, refers to a piece of the modulation format setup information determined not to contain errors, and sets up said modulation formats based on the piece of the modulation format setup information.

10. The radio communication system as set forth in claim 8 or claim 9,
wherein said modulation format control section increases or decreases the number of parity bits for an error correction, based on the qualities of the received signals for the individual downlink channels so as to decide said modulation formats.

11. The radio communication system as set forth in claim 8 or claim 9,
wherein said modulation formats are orthogonal amplitude modulation formats in which signal states of a modulation amplitude are multi-valued, and
wherein said modulation format control section increases or decreases the number of multi-valued signal states of said orthogonal amplitude modulation format based on the qualities of the received signals for the individual downlink channels so as to decide said modulation formats.

12. The radio communication system as set forth in claim 8 or claim 9,
wherein said modulation format control section increases or decreases a modulation speed based on the qualities of the received signals for the individual downlink channels so as to decide said modulation formats.

13. The radio communication system as set forth in any one of claims 8 to 12,
wherein said plurality of transmitters include an active transmitter and a backup transmitter and said plurality of receivers include an active receiver and a backup receiver.

14. The radio communication system as set forth in any one of claims 8 to 12,
wherein said plurality of transmitters include a first transmitter that transmits a signal of a first polarization and a second transmitter that transmits a signal of a second polarization that is different from said first polarization,
wherein, said plurality of receivers include a first receiver that receives a signal of said first polarization and a second receiver that receives a signal of said second polarization.

15. A radio device that is mutually communicably connected to an external radio device through a plurality of radio channels that have different frequencies, comprising:
a plurality of transmitters that are provided corresponding to uplink channels through which signals are transmitted to said external radio device, that modulate signals, and that transmit the modulated signals through the uplink channels;
a plurality or receivers that are provided corresponding to downlink channels through which signals are received from said external radio device; and
a modulation format control section that refers to respective pieces of modulation format setup information for said plurality of transmitters, these pieces of modulation format setup information being received by at least one of said plurality of receivers, and that sets up modulation formats for said plurality of transmitters based on these pieces of modulation format setup information,
wherein said modulation format control section decides modulation formats that have transmission performances based on qualities of the received signals for said individual downlink channels and causes said plurality of transmitters to transmit modulation format setup information in which respective pieces of information that represent the decided modulation formats for the individual downlink channels are combined into one piece.
